# EUROPÄISCHE PATENTSCHRIFT

(11) **EP 1 105 701 B1**
(45) Veröffentlichungstag und Bekanntmachung des Hinweises auf die Patenterteilung: **19.03.2003**
(21) Anmeldenummer: 99936549.7
(22) Anmeldetag: 15.07.1999
(51) Int. Cl.: G01F 23/00, G01F 15/08

(54) **VORRICHTUNG UND VERFAHREN ZUR VOLUMENBESTIMMUNG**
DEVICE AND METHOD FOR DETERMINING VOLUME
DISPOSITIF ET PROCEDE DE DETERMINATION DE VOLUME

(30) Priorität: 27.08.1998 DE 19839112
(43) Veröffentlichungstag der Anmeldung: 13.06.2001
(73) Patentinhaber: BARTEC Logistic Management GmbH, 59227 Ahlen (DE)
(72) Erfinder: BARLIAN, Reinhold, A., D-97980 Bad Mergentheim (DE); BÖHM, Alfred, D-94234 Viechtach (DE); BÖHM, Gerd, D-94234 Viechtach (DE); BRETZENDORFER, Johann, D-94469 Deggendorf (DE); BRÜGGEMANN, Alfons, D-48480 Spelle (DE)
(74) Vertreter: Heim, Hans-Karl, Dipl.-Ing.
(86) Internationale Anmeldenummer: EP9905065
(87) Internationale Veröffentlichungsnummer: WO00012972

(56) Entgegenhaltungen:
- WO-A-83/04407
- DE-A- 2 645 967
- DE-A- 2 835 036
- DE-A- 4 020 725
- GB-A- 1 512 807
- US-A- 5 757 664

## Beschreibung

Die Erfindung betrifft eine Vorrichtung zur Förderung eines Mediums von einem Behälter in einen Tank und zur Bestimmung der Menge des Mediums, mit einer Leitungseinrichtung zwischen dem Behälter und dem Tank, einer mit der Leitungseinrichtung in Verbindung stehenden Fördereinrichtung und einer Vorrichtung zum Abscheiden von Gas aus dem Medium. Die Erfindung betrifft ferner ein Verfahren zur Förderung eines Mediums von einem Behälter in einen Tank und zur Bestimmung der Menge des Mediums, bei dem das Medium über eine Fördereinrichtung und eine Leitungseinrichtung transportiert wird und von dem Medium aufgenommenes Gas abgeschieden wird.

Derartige Vorrichtungen und Verfahren finden Einsatz in verschiedensten Bereichen, wie z.B. in der Milchwirtschaft oder beim Vertrieb von Treibstoffen.

Im Bereich der Milchwirtschaft fährt ein Tankwagen regelmäßig bestimmte Milcherzeuger an und entnimmt die dort z.B. im Laufe eines Tages angefallene Milch aus einem oder mehreren Vorratsbehältern. Dabei ist es besonders wichtig, daß die entnommene Menge Milch genau gemessen und registriert wird, da auf dieser Grundlage eine spätere Abrechnung zwischen dem Erzeuger und dem Abnehmer erfolgt.

Aus diesem Grund sind an die Qualität der Mengenmessung hohe Anforderungen zu stellen, was sich insbesondere darin äußert, daß gesetzliche Bestimmungen im Hinblick auf die Eichungen und die Qualität der Meßergebnisse existieren.

Um diesen hohen Anforderungen gerecht zu werden, ist es erforderlich, mögliche Meßfehler zu minimieren. Ein besonders schwerwiegender und nur mit einigem apparativem Aufwand zu eliminierender Meßfehler resultiert aus der Tatsache, daß sich z.B. die Milch beim Entnahmevorgang durch Pumpen oder dergleichen mit Luft anreichert, was sich in einem mehr oder weniger starken Aufschäumen der Milch äußert. Insofern ist es erforderlich, vor der eigentlichen Mengenmessung eine Luftabscheidung vorzunehmen. Aus diesem Grund wird bei den meisten Vorrichtungen und Verfahren des Standes der Technik die Milch zunächst einem Luftabscheider zugeführt, wo sie bis zur ausreichenden Entgasung verbleibt, um erst dann über einen Durchflußmesser dem zu befüllenden Tank zugeführt zu werden.

In der Bundesrepublik Deutschland existiert beispielsweise eine Normvorschrift (DIN 19217: 1997-11), welche zwingende Vorschriften im Zusammenhang mit der Luftabscheidung enthält (siehe dort Abschnitt 2.10.2). Die in der DIN angegebenen technischen Merkmalen bilden die Oberbegriffe der unabhängigen Patentansprüche. Allerdings schreibt die DIN zwingend vor, daß zur Erfüllung der Eichpflicht die Gasabscheidevorrichtung ein separates Element der Anlage sein muß. Dies führt zu einem problematisch hohen apparativen Aufwand. Ferner besteht bei Anlagen mit separatem Gasabscheider, wie sie aufgrund der DIN zwingend vorgeschrieben sind, das bereits erwähnte Problem der Zeitverzögerung während der Förderung des Mediums, da dieses zwischenzeitlich in dem Luftabscheider verharren muß. Daher wurde bereits in der EP 0 626 567 B1 ein Durchflußmesser vorgeschlagen, welcher selbst bei luftbefrachteter Milch in der Lage ist, das Volumen hinreichend genau zu bestimmen. Gleichwohl sind diese an sich gut funktionierende Vorrichtung sowie das damit durchzuführende Verfahren vergleichsweise aufwendig und somit verbesserungsbedürftig.

In der DE 33 19 277 A1 ist ein Schwimmer für eine in einem Innenraum eines Milchbehälters vorgesehene Niveausteuerung offenbart. Das Niveau der Milch wird dadurch ermittelt, daß im Innenraum des Schwimmers ein Magnet vorgesehen ist, welcher mit einem Permanentmagneten innerhalb eines Peilstabes wechselwirkt.

In der EP O 806 636 A1 ist ebenfalls eine Vorrichtung zur Pegelbestimmung, hier in Flugzeugtanks, offenbart. Diese Vorrichtung enthält die erwähnenswerte Besonderheit, daß die Niveaubestimmung nach dem sogenannten magnetostriktiven Prinzip arbeitet, d.h. nach einem Verfahren, welches die Laufzeit von Ultraschallimpulsen ausnutzt, die durch Magnetfelder erzeugt werden.

Der Erfindung liegt die **Aufgabe** zugrunde, eine eine Vorrichtung zur Volumenbestimmung bereitzustellen, wobei die Vorrichtung bei möglichst geringem apparativem Aufwand und unter Vermeidung durch Gaseinschluß bedingter Meßfehler eine besonders genaue Bestimmung des Volumens erlaubt; weiterhin soll ein Verfahren zur Befüllung eines Tanks sowie zur Bestimmung des Füllpegels zur Verfügung gestellt werden, welches die Vorteile der erfindungsgemäßen Vorrichtung umsetzt.

Diese Aufgabe wird mit einer Vorrichtung gemäß Patentanspruch 1 sowie mit einem Verfahren nach Patentanspruch 18 gelöst.

Die erfindungsgemäße Vorrichtung baut auf dem Stand der Technik dadurch auf, daß die Vorrichtung zum Abscheiden von Gas und der Tank eine integrierte Einheit sind, daß eine Füllpegel-Meßeinrichtung im wesentlichen im Inneren des Tanks zur Bestimmung der Position mindestens einer Grenzfläche des Mediums in dem Tank vorgesehen ist und daß die Füllpegelmeßeinrichtung mindestens einen Peilstab aufweist. Mit dieser Vorrichtung wird die Verwendung eines separaten Luftabscheiders entbehrlich, obwohl dies aufgrund des Standes der Technik nicht möglich zu sein scheint, insbesondere angesichts der oben zitierten DIN 19217: 1997-11. Die Luftabscheidung erfolgt erst in dem zu befüllenden oder befüllten Tank; dies ist möglich, da die durch Pegelmessung ermittelte Volumenmessung äußerst präzise im Tank stattfindet und nicht etwa - wie beim Stand der Technik - ausschließlich durch einen, dem Tank vorgelagerten Durchflußmesser. Der apparative Aufwand wird insofern erheblich vermindert.

Besonders vorteilhaft ist die erfindungsgemäße Vorrichtung, wenn die Füllpegel-Meßeinrichtung einen nach dem magnetostriktiven Prinzip arbeitenden, mit einer Rechenvorrichtung gekoppelten, transsonaren Wegaufnehmer aufweist, der mit mindestens einem Peilstab und mindestens einem Schwimmer ausgestattet ist, wobei der oder die Schwimmer mit mindestens einem Magneten ausgestattet ist/sind. Das magnetostriktive Prinzip beruht auf dem Phänomen, daß zwei sich kreuzende Magnetfelder eine Verformung des Metalls, in dem diese gebündelt sind, hervorrufen. Gibt man nun in den Peilstab einen Erregerstromimpuls, so resultiert daraus ein bezüglich des Peilstabs axialsymmetrisches Erregermagnetfeld. Dieses wechselwirkt mit den kreuzenden Magnetfeldern der Schwimmermagnete, wodurch eine kurzzeitige Deformation und ein daraus entstehender Ultraschallimpuls in dem als Wellenleiter wirkenden Peilstab erzeugt wird. Aus der Laufzeit des Ultraschallpulses durch den Peilstab bis zu einem, vorzugsweise am Peilstab endseitig angeordneten Empfänger, läßt sich, in Kenntnis der Schallgeschwindigkeit in dem Wellenleiter, auf die Position der Magnete und somit des Schwimmers rückschließen. Wegaufnehmer dieser Art sind hinreichend bekannt. Durch die derart ausgestattete Vorrichtung ist es möglich, die Position des Schwimmers bis zu einer Größenordnung von 10 µm zu messen. Transsonare Wegaufnehmer sind ferner langzeitstabil und erfüllen somit die strengen gesetzlichen Vorschriften hinsichtlich Eichung und Meßgenauigkeit.

Es ist vorteilhaft, wenn der Peilstab an der Oberseite des Tanks befestigt ist. Dadurch ist eine einfache Entnahme und Montage des Peilstabs möglich, was z.B. im Zusammenhang mit der Wartung und der Reinigung nützlich sein kann.

Besonders vorteilhaft ist es, wenn ein Referenzsignalgeber an der Unterseite des Tanks im wesentlichen auf der Achse des Peilstabs angeordnet ist und der Peilstab den Referenzsignalgeber durchdringt. Der Referenzsignalgeber gibt ein füllstandunabhängiges Signal ab, so daß der Empfänger zwei, im allgemeinen aufeinanderfolgende Signale empfängt. Durch Messung der Laufzeiten beider Signale und Differenzbildung kann ein Meßfehler aufgrund der z.B. temperaturbedingten Längenausdehnung des Peilstabs eliminiert werden. Durch die Anordnung des Referenzsignalgebers an der Unterseite des Tanks und den ihn durchdringenden Peilstab kann der Schwimmer bis in den unteren Bereich des Tanks gelangen und entsprechende Füllpegelsignale erzeugen. Der Peilstab wird aufgrund des freien Durchdringens des Referenzsignalgebers nicht an einer temperaturbedingten Ausdehnung gehindert, welche somit definiert, ohne Beanspruchung des Systems erfolgen kann.

Es kann auch vorteilhaft sein, den Peilstab an der Unterseite des Tanks zu befestigen, insbesondere im Hinblick auf möglichst variable Konstruktionsmöglichkeiten.

Bevorzugt ist der Wegaufnehmer mit einer Meßfrequenz von 500 Hz betreibbar. Aufgrund dieser hohen Wiederholungsfrequenz wird eine quasi kontinuierliche Messung ermöglicht.

Als Schwimmer ist vorteilhafterweise ein Doppelschwimmer zur Dichtemessung vorgesehen. Man erhält somit neben der Füllstandsmessung eine weitere Information betreffend den Zustand des Mediums.

Weiter ist vorteilhaft, wenn der Peilstab von einem Beruhigungsrohr umgeben ist, wobei das Beruhigungsrohr einzelne Öffnungen für den Durchtritt des Mediums aufweist. Hieraus ergeben sich die Vorteile insbesondere im Zusammenhang mit der Verwendung der erfindungsgemäßen Vorrichtung in Tankfahrzeugen. Durch die Bewegung der Fahrzeuge wird die Flüssigkeitsoberfläche gewöhnlich in starke Bewegungen versetzt, wobei die Beruhigung dieser Oberflächenbewegung eine unerwünscht lange Zeit beanspruchen kann. Indem nun der Peilstab von einem Beruhigungsrohr umgeben ist, welches über Öffnungen nach dem Prinzip der kommunizierenden Röhren mit dem restlichen Volumen des Tanks in Verbindung steht, kommt es im entscheidenden Bereich - in dem den Peilstab unmittelbar umgebenden Bereich - zu einer um Größenordnungen rascheren Beruhigung und somit zu erheblicher Zeit- und Kostenersparnis.

Gleichermaßen kann die Verwendung einer Rechenvorrichtung vorgesehen sein, welche ein auf Software basierendes digitales Filter aufweist und welche zur Umformung der Füllpegelwerte in Volumenwerte geeignet ist. Die Verwendung eines digitalen Filters ist aufgrund der hohen Meßfrequenz, welche vorzugsweise vorliegt, möglich. Im Prinzip können alle bekannten Filter wie z.B. Butterworth-, Tschebyscheff- oder Bessel-Filter etc. eingesetzt werden. Die Rechenvorrichtung hat Zugriff auf Daten, welche die Geometrie des Tanks beschreiben, so daß die genannte Umrechnung erfolgen kann. Der Vorteil besteht darin, daß direkt die interessierenden Volumendaten und nicht die primär gemessenen Füllpegeldaten angezeigt werden können.

Die Füllpegel-Meßeinrichtung kann ebenfalls einen kapazitiven oder potentiometrischen Peilstab aufweisen. Ferner kann auch eine Ultraschall-Meßeinrichtung eingesetzt werden. Dies erhöht die Flexibilität bezüglich der Einsatzmöglichkeiten, beispielsweise im Zusammenhang mit den verschiedenen physikalischen Eigenschaften der fraglichen Medien.

Vorzugsweise ist der Peilstab, insbesondere bei symmetrischen Tanks, in der volumetrischen Mitte angeordnet. Dadurch werden Meßfehler durch Schrägstellung des Tanks minimiert.

Weiterhin können Einrichtungen zur Temperaturmessung bezüglich beliebiger Komponenten, vorzugsweise innerhalb des Tanks, vorgesehen sein, wobei die Ergebnisse der Temperaturmessungen dem Rechner eingebbar sind. Es kann dadurch eine Korrektur temperaturbedingter Meßfehler auf Software-Ebene durchgeführt werden.

Besonders vorteilhaft ist es, wenn der Rechner ferner mit einem zweiachsigen Inklinometer verbunden ist. Damit können dem Rechner Daten bezüglich der Winkelstellung des Tanks eingegeben werden, was eine weitere Korrekturmöglichkeit zum Erhöhen der Meßgenauigkeit darstellt.

Vorzugsweise ist das System mit einem Probenentnehmer ausgestattet, welcher Probenmengen entnimmt, die proportional zum geförderten Volumen sind. Eine solche proportionale Entnahme ist sinnvoll, da damit eine repräsentative Probe entsteht, welche dieselbe qualitative Zusammensetzung aufweist, wie die gesamte geförderte Menge. Die proportionale Entnahme ist möglich, da eine quasi kontinuierliche Volumenmessung durch die erfindungsgemäße Vorrichtung vorgenommen werden kann, und somit direkte Informationen über den Volumenstrom vorliegen.

In diesem Zusammenhang oder auch zur weiteren Erhöhung der Meßgenauigkeit kann die Volumenmessung zusätzlich durch einen eventuell vorgesehenen Durchflußmesser unterstützt werden. Der Einsatz eines solchen Durchflußmessers ist besonders dann nützlich, wenn bereits entgaste Milch von einem kleineren in einen größeren Tank überführt werden soll. In diesem Zusammenhang ist zu erwähnen, daß durch die Verwendung eines kleinen Tanks die absolute Meßgenauigkeit zusätzlich erhöht wird; insbesondere wird der Meßfehler auch noch dadurch vermindert, daß man die Querschnittsfläche des Tanks zugunsten seiner Höhe vermindert.

Bevorzugt weist die Leitungseinrichtung eine Ventileinrichtung auf, welche ein Rückschlagventil und ein von dem Rechner ansteuerbares Ventil umfaßt. Das Rückschlagventil und das ansteuerbare Ventil können auch in Form eines einzigen Ventils realisiert sein. Das Rückschlagventil verhindert das Zurückfließen des Mediums aus dem Tank in den Behälter und bildet den Nullpunkt der Volumeneichung, während das von dem Rechner ansteuerbare Ventil z.B. geschlossen wird, wenn Überfüllung des Tanks droht. Um die Übernahme fortzusetzen, ist es in diesem Fall z.B. möglich, ein Ventil zu einem weiteren Tank oder einer weiteren Kammer zu öffnen.

Ferner kann es vorteilhaft sein, wenn die Leitungseinrichtungen Windungen aufweisen. Diese Windungen können die Entgasung des Mediums unterstützen, da durch die Zentrifugalkraft das Medium an die Außenwandung der Leitungseinrichtung gedrückt wird, während das Gas in den Innenbereich austreten kann; stellt man dem Gas eine Möglichkeit zur Verfügung, durch welche es aus dem Leitungssystem entkommen kann, so wird durch diese Maßnahme bereits teilweise entgastes Medium in den Tank eintreten.

Als Fördereinrichtung wird vorzugsweise eine selbstansaugende Impellerpumpe verwendet.

Es kann vorteilhaft sein, das System mittels Vakuum zu betreiben.

Weiter kann vorteilhaft sein, wenn die Rechenvorrichtung mit dem oder den einstellbaren bzw. steuerbaren Ventilen und/oder mit der Fördereinrichtung verbunden ist. Dadurch kann die Fördermenge gesteuert bzw. geregelt werden, in Abhängigkeit von beliebigen, der Rechenvorrichtung zugeführten Daten.

Bevorzugt ist eine Rechenvorrichtung vorgesehen, mit welcher beliebige Meßergebnisse aufnehmbar sind und mit welcher beliebige Prozeßparameter steuerbar, überwachbar und regelbar sind.

Das erfindungsgemäße Verfahren baut auf dem Stand der Technik dadurch auf, daß die Gasabscheidung zumindest teilweise in dem Tank erfolgt und daß der Füllpegel in dem Tank von einer Füllpegelmeßeinrichtung gemessen wird. Aufgrund dieses Verfahrens ist es entbehrlich, einen separaten Luftabscheider zu verwenden, da der Füllpegel und somit das Volumen in dem Tank gemessen werden, was eine Luftabscheidung vor dem Durchtritt des Mediums durch einen Durchflußmesser entbehrlich macht.

Bevorzugt beruht das eigentliche Füllpegel-Meßverfahren auf dem magnetostriktiven Prinzip. Dieses ermöglicht eine besonders genaue Füllpegelmessung.

Besonders vorteilhaft ist es, wenn der Füllpegel durch Ermitteln der Differenz der Laufzeiten eines am Ort eines Schwimmers erzeugten sowie eines an einem bezüglich des Tanks festen Ort erzeugten Signals bestimmt wird. Durch eine solche Differenzmessung wird das Verfahren von einer eventuellen z.B. temperaturbedingten Ausdehnung des Peilstabs unabhängig.

Vorzugsweise wird an beliebigen Orten der Anordnung, insbesondere im Medium selbst, die Temperatur gemessen, ferner die Winkelstellung des Tanks und/oder die Dichte des Mediums, wobei die Meßergebnisse einer Rechenvorrichtung zugeführt werden. Durch diese Messungen können die Meßergebnisse hinsichtlich des Volumens vorteilhaft korrigiert werden. Die Dichtemessung spielt insbesondere im Hinblick auf die Produkterkennung oder die Qualitätsprüfung eine wichtige Rolle.

Es ist bevorzugt, wenn eine Rechenvorrichtung in der Lage ist, unter Einbeziehung beliebiger Eingaben, das Ventil zum Tank zu öffnen bzw. zu schließen, die Förderleistung der Fördereinrichtung zu steuern und weiterhin die Förderleistung zu überwachen.

In einer Rechenvorrichtung wird vorzugsweise ein digitales Filter zur Korrektur von Oberflächenschwankungen verwendet. Dies ist insbesondere aus dem Grunde möglich, da vorzugsweise eine Meßfrequenz von 500 Hz verwendet wird, womit eine quasi kontinuierliche Messung vorliegt; dadurch ist die Verwendung praktisch beliebiger digitaler Filter möglich, und die Zeit, welche erforderlich ist, um ein zuverlässiges Meßergebnis zu erreichen, wird um mehrere Größenordnungen verringert.

Besonders vorteilhaft ist es, wenn bereits ein Teil des Gases vor Eintritt des Mediums in den Tank abgeschieden wird, da dies die Füllgeschwindigkeit und die Zuverlässigkeit der Messung nochmals erhöht.

Weiterhin ist bevorzugt, wenn bei der Befüllung des Tanks die Steiggeschwindigkeit des Schwimmers kontinuierlich überwacht wird. Diese muß bei ordnungsgemäßem Betrieb der Anlage mit einer erwarteten Pumpenleistung korrelieren, so daß bei einer fehlenden Korrelation auf einen Fehler in der Anlage rückgeschlossen werden kann.

Bevorzugt wird während des Füllvorgangs eine repräsentative Probe entnommen, wobei die Probemenge mit der Volumenzunahme korreliert ist. Letzteres ermöglicht die Qualitätssicherung des Produktes.

Es ist vorteilhaft eine Rechenvorrichtung zur Aufnahme beliebiger Meßergebnisse und zur Steuerung, Überwachung und Regelung beliebiger Prozeßparameter zu verwenden. Diese bevorzugte Integration ermöglicht eine variable und zentrale Steuerung des Systems.

Die Erfindung und eine Vorrichtung des Standes der Technik werden nun mit Bezug auf die begleitenden Zeichnungen beispielhaft erläutert. Dabei zeigt:
- Fig. 1: eine Seitenansicht der erfindungsgemäßen Vorrichtung;
- Fig. 2: eine Seitenansicht einer Vorrichtung des Standes der Technik;
- Fig. 3: einen Ausschnitt aus einem Tank mit Füllpegel-Meßeinrichtung zur Erläuterung des Differenzverfahrens;
- Fig. 4: einen Teil eines Tanks in Seitenansicht mit Komponenten einer bevorzugten Ausführungsform der Erfindung;
- Fig. 5: eine Seitenansicht von Komponenten einer bevorzugten Ausführungsform der Erfindung zur Dichtemessung; und
- Fig. 6: eine Seitenansicht eines Teils der erfindungsgemäßen Vorrichtung in einer bevorzuten Ausführungsform zur Luftabscheidung.

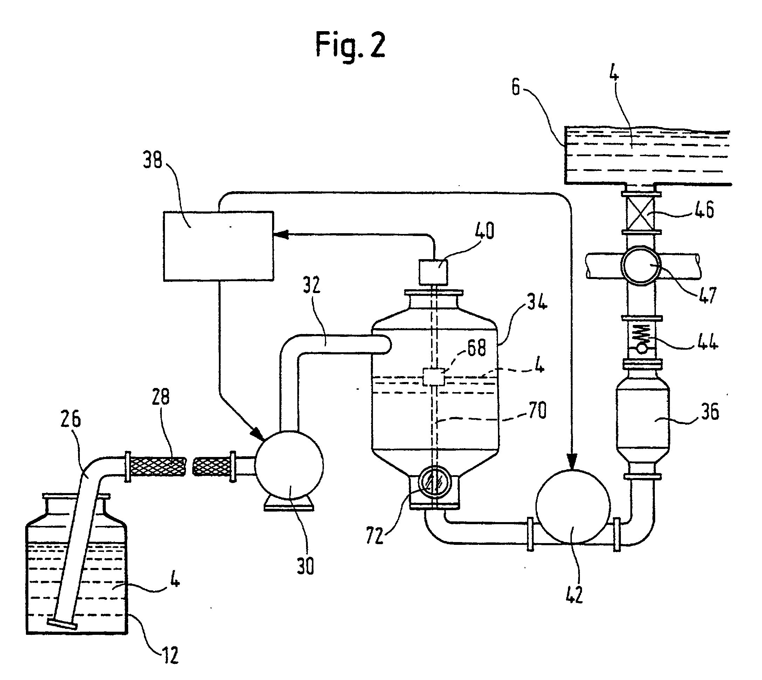

Zunächst wird eine Vorrichtung des Standes der Technik anhand von Fig. 2 erläutert. Aus einem Behälter 12 wird über einen Saugrüssel 26, der über einen flexiblen Schlauch 28 mit einer Impellerpumpe 30 verbunden ist, das Medium 4, z.B. Milch abgesaugt. Beim Absaugen können, besonders zu Beginn und am Ende der Entnahme, Gaseinschlüsse entstehen. Die Impellerpumpe 30 ist selbstansaugend und muß daher nicht ständig gefüllt sein, was insbesondere den Beginn des Entnahmevorgangs erleichtert. Aus der Impellerpumpe 30 wird das Medium 4 über eine Rohrleitung 32 in den Gasmeßverhüter bzw. Luftabscheider 34 gepumpt. In dem Luftabscheider 34 wird das Medium 4 zwischengespeichert, so daß während dieser Zeit Lufteinschlüsse in den Raum oberhalb der Flüssigkeitsoberfläche austreten können. So wird sichergestellt, daß die eingeschlossene Luft vor dem Erreichen einer nachfolgenden Volumenmeßanlage 36 zumindest zu einem großen Teil ausgetreten ist. Damit stets eine geeignete Menge des Mediums 4 in dem Luftabscheider 34 vorhanden ist, wird das Niveau des Mediums 4 in dem Luftabscheider 34 geregelt. Diese Regelung (bzw. Steuerung) übernimmt die Steuereinheit 38, welche mit einer Füllstand-Meßeinrichtung 40 des Luftabscheiders 34 verbunden ist. Ferner steht die Steuereinheit 38 mit der Impellerpumpe 30 und einer hinter dem Auslaßbereich des Luftabscheiders 34 angeordenten Kreiselpumpe 42 in Verbindung. Durch geeignete Steuerung dieser Komponenten durch die Steuereinheit 38 läßt sich der Betrieb in Abhängigkeit des Füllstandes innerhalb des Luftabscheiders steuern. Ferner ist die Steuereinheit 38 im Zusammenhang mit der Eichung der Anlage wichtig. Zu Beginn der Annahme befindet sich der Schwimmer 68 bezüglich des Peilstabs 70 auf einem Ausgangsniveau. Dieses Ausgangsniveau ist für den Kunden bzw. Lieferanten durch das Schauglas 72 einsehbar.

Das Ausgangsniveau ist für alle Annahmevorgänge relevant und muß am Ende jeder Annahme exakt wieder "angefahren" werden. Die Kreiselpumpe 42 fördert das Medium 4 durch einen Durchflußmesser 36 (z.B. MID (magngetisch-induktiver Durchflußmesser)) und eine Ventilvorrichtung 44, 46 in den zu befüllenden Tank 6. Die Ventilvorrichtung weist ein Rückschlagventil 44 sowie ein Ventil 46 auf, welches geöffnet bzw. geschlossen werden kann. Zur Beschickung mehrerer Tanks ist in dem Ventilbereich zusätzlich ein Verteiler 47 vorgesehen.

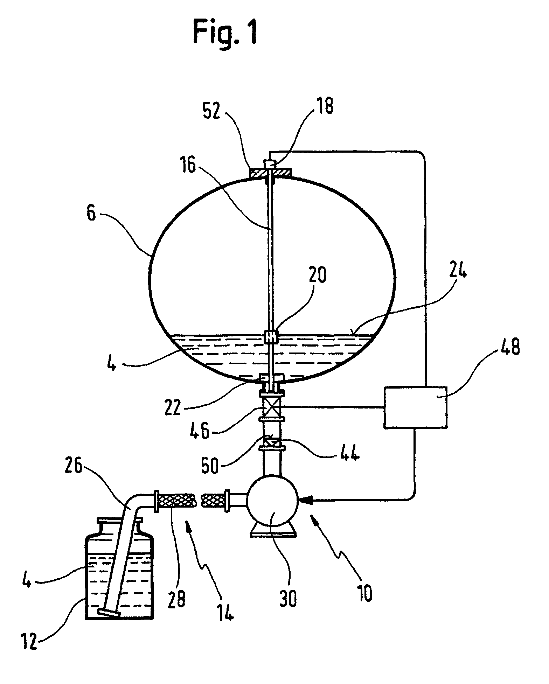

Fig. 1 zeigt eine Ausführung der vorliegenden Erfindung, wobei im Vergleich zum Stand der Technik nach Fig. 2 eine erkennbar verminderte Anzahl Komponenten vorgesehen ist.

Wiederum wird aus einem Behälter 12 über einen Saugrüssel 26 das Medium 4 abgesaugt. Der Saugrüssel 26 ist über eine Schlauchleitung 28 mit einer Impellerpumpe 30 verbunden. Von der Impellerpumpe 30 kann das Medium weiter über ein Rückschlagventil 44 und ein von einer Rechnereinheit 48 ansteuerbares Ventil 46 in den Tank 6 gelangen. Der Tank 6 ist in seinem Inneren mit einer Füllpegel-Meßeinrichtung ausgestattet, welche einen Peilstab 16, einen Empfängerbereich 18, einen Schwimmer 20 sowie einen Referenzsignalgeber 22 aufweist. Der Empfängerbereich 18 ist am Domdeckel 52 des Tanks 6 angeordnet, wo auch der Peilstab 16 befestigt ist. Das Rückschlagventil 44 bildet mit seiner Oberfläche 50 gleichzeitig das Eichniveau. Die Recheneinrichtung 48 ist mit dem Empfänger 18 der Füllpegel-Meßeinrichtung (16, 18, 20, 22), dem Ventil 46 sowie der Pumpe 30 verbunden. Somit können Förderleistung der Pumpe 30 und Stellung des Ventils 46 durch die Recheneinrichtung 48 in Abhängigkeit des Füllstandes gesteuert werden.

Die Füllpegel-Meßeinrichtung (16, 18, 20, 22) funktioniert nach dem magnetostriktiven Prinzip. Dieses beruht auf dem physikalischen Phänomen, daß zwei sich kreuzende Magnetfelder eine Verformung des Metalls, in dem sie gebündelt sind, hervorrufen. Im vorliegenden Fall wird das eine Magnetfeld von einem Magneten erzeugt, welcher mit dem Schwimmer 20 in Verbindung steht. Es können auch mehrere Magnete vorgesehen sein. Das Erregermagnetfeld wird durch einen Erregerstromimpuls erzeugt, welcher dem Peilstab 16 zugeführt wird. Damit wird im Zeitpunkt zu dem der Erregerstromimpuls am Ort des Schwimmers 20 eintrifft, ein Ultraschallimpuls im Peilstab 16 erzeugt, dessen Laufzeit bis zum Empfängerbereich 18 gemessen wird. Hieraus läßt sich, in Kenntnis der Schallgeschwindigkeit in dem Peilstab 16, auf die Position des Schwimmers 20 und mit der Oberfläche 24 des Mediums 4 rückschließen. Im unteren Bereich der Füllpegel-Meßeinrichtung (16, 18, 20, 22) ist ferner beim vorliegenden bevorzugten Ausführungsbeispiel ein Referenzsignalgeber 22 angeordnet, durch welchen der Peilstab 16 frei hindurchtritt. Der Peilstab 16 ist an seinem anderen Ende am Domdeckel 52 des Tanks 6 befestigt. Da der Referenzsignalgeber 22 bezüglich des Tanks 6 eine feste Position hat, ist diese unabhängig von eventuellen, z.B. temperaturbedingten Ausdehnungen des Peilstabs 16. Der Empfänger 18 ist nun in der Lage sowohl die Signale des Referenzsignalgebers 22 als auch die Signale des Schwimmers 20 zu empfangen. Durch Differenzbildung der Laufzeiten kann ein Meßfehler aufgrund einer z.B. temperaturbedingten Längenänderung des Peilstabes 16 eliminiert werden.

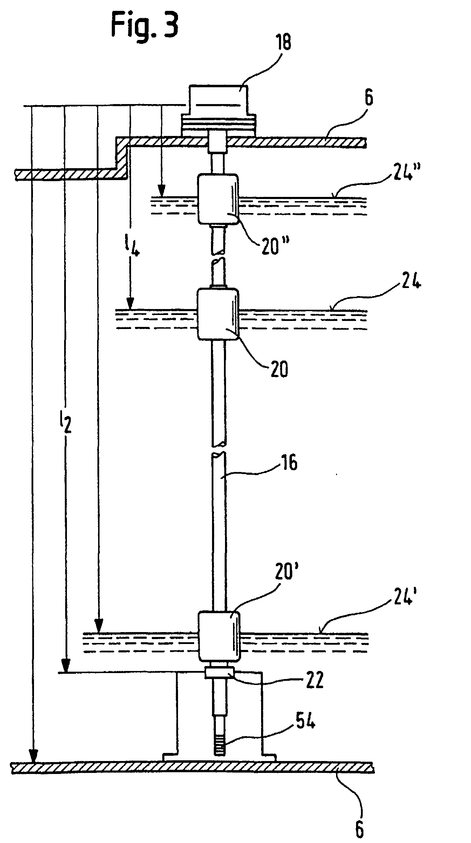

Das Differenzmeßverfahren wird weiter anhand von Fig. 3 veranschaulicht. Hier ist ein Ausschnitt des Tanks 6 mit drei Schwimmern 20, 20', 20'' dargestellt, welche drei möglichen Pegelständen zugeordnet sind. Unterhalb des unteren Schwimmers 20' ist ein Referenzsignalgeber 22 dargestellt. Der untere Schwimmer 20' befindet sich bei minimalem Füllstand, während sich der obere Schwimmer 20'' bei maximalem Füllstand aufhält. Unterhalb des Referenzsignalgebers 22 liegt eine Dämpfungszone 54 des Peilstabs 16 vor, um den Meßprozeß beeinträchtigende Reflexionen am unteren Ende des Peilstabs 16 zu vermeiden. Das Differenzverfahren soll nun beispielhaft am mittleren Schwimmer 20 erläutert werden. Dieser hat zum Empfänger 18 einen Abstand l₄. Durch diese Anordnung wirkt sich eine temperaturbedingte Ausdehnung des Peilstabs 16 nicht auf die Messung aus, da effektiv die Wegstrecke l₂-l₄ bestimmt wird, also eine Größe, welche durch Differenzbildung den Meßfehler aufgrund einer Längenänderung eliminiert.

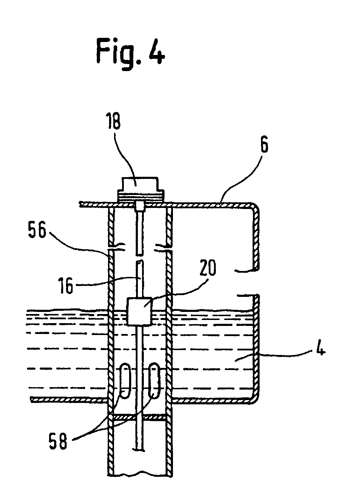

Fig. 4 zeigt den Ausschnitt eines Tanks 6 mit einer besonderen Ausgestaltung der Meßeinrichtung. Dabei ist der Peilstab 16 von einem Beruhigungsrohr 56 umgeben. Der Innenbereich des Beruhigungsrohres 56 steht über eine oder mehrere Öffnungen 58 mit dem restlichen Bereich des Tanks 6 in Verbindung, so daß das Medium 4 nach dem Prinzip der kommunizierenden Röhren innerhalb und außerhalb des Beruhigungsrohres 56 den gleichen Füllstand einnehmen kann. Das Beruhigungsrohr 56 hat nun den Effekt, daß sich die Oberfläche innerhalb dieses in radialer Richtung kleinen Bereiches sehr rasch beruhigt, im Gegensatz zur langsamen Beruhigung der sehr viel größeren restlichen Fläche des Mediums 4. Dies hat insbesondere bei der Verwendung der erfindungsgemäßen Vorrichtung in Tankfahrzeugen den Vorteil, daß eine genaue Messung bereits kurze Zeit nach dem Anhalten oder sogar während der Fahrt des Fahrzeugs ermöglicht wird. In diesem Zusammenhang ist zu erwähnen, daß eine Korrektur der Oberflächenschwankungen aufgrund der hohen Meßfrequenz des erfindungsgemäßen Verfahrens (vorzugsweise im Bereich von 500 Hz) auch durch digitale Filter in einer Recheneinrichtung, welche zur Steuerung des Systems ohnehin vorhanden ist, durchgeführt werden kann. Besonders vorteilhaft kann dabei sein, die digitalen Filter in Kombination mit dem Beruhigungsrohr 56 nach Fig. 4 einzusetzen. Es ist ferner möglich ein RC-Filter zu verwenden.

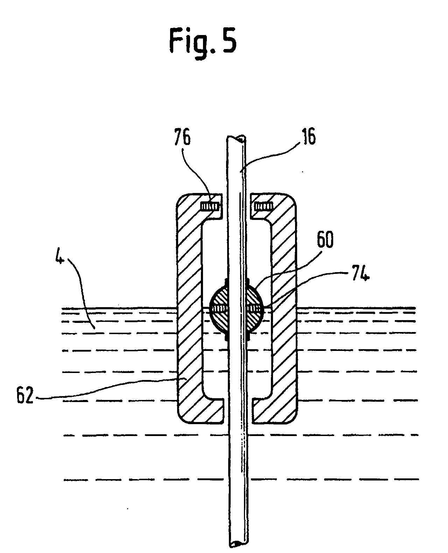

Fig. 5 zeigt eine besondere Ausführungsform eines Schwimmers 20 zur Bestimmung der Dichte des jeweiligen Mediums. Der Schwimmer 20 ist zweiteilig, wobei er einen Füllstandsschwimmer 60 sowie einen Dichteschwimmer 62 umfaßt. Beide Schwimmer 60, 62 des Doppelschwimmers 20 weisen Magnete 74, 76 auf, so daß durch die Laufzeitdifferenzen der zugehörigen Messungen auf die Eintauchtiefe des Dichteschwimmers 62 rückgeschlossen werden kann. Da diese Eintauchtiefe des Dichteschwimmers 62 von der Dichte des Mediums 4 abhängt, kann insgesamt aus der Laufzeitdifferenz die Dichte des Mediums 4 errechnet werden. Damit liegt eine weitere Information über das Medium 4 vor, welche beim Steuerungsprozeß verwendet werden kann und welche Aufschluß über die Qualität des Produktes gibt. Besonders vorteilhaft ist die Dichtemessung, wenn als Medium 4 Treibstoff vorliegt. Die verschiedenen Treibstoffe weisen bei einer bestimmten Temperatur verschiedene Dichten auf, so daß, in Kenntnis der Temperatur, aus der Dichte auf die Art des Treibstoffs (z.B. Super bleifrei) geschlossen werden kann. Die Dichtemessung in Kombination mit einer Temperaturmessung kann somit der Identifikation des Mediums 4 dienen.

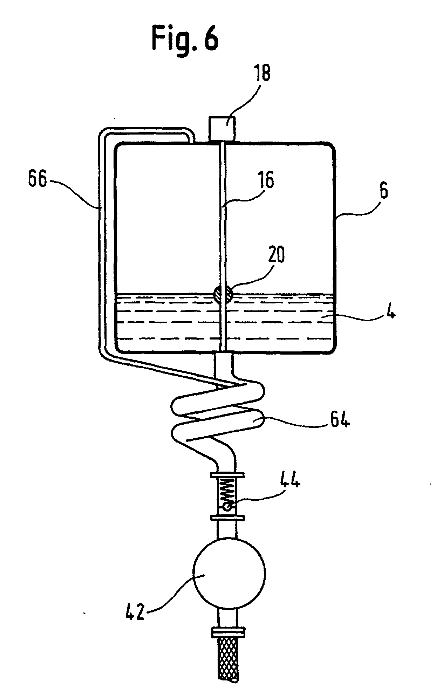

In Fig. 6 ist eine Möglichkeit dargestellt, wie in einfacher Weise bereits vor Eintritt des Mediums 4 in den Tank 6 eine teilweise Entgasung des Mediums 4 stattfinden kann. Die Pumpe 42 pumpt das Medium über einen in Form einer Wendel gewundenen Leitungsabschnitt 64 in den Tank 6. Durch die auftretenden Zentrifugalkräfte in dem gewundenen Leitungsabschnitt 64 wird das Medium hauptsächlich an der Außenwand des gewundenen Leitungsabschnittes transportiert, während Gaseinschlüsse in den inneren Bereich austreten können. Stellt man nun eine Austrittsöffnung für das Gas zur Verfügung, welche über eine Entlüftungsleitung 66 mit dem Tank 6 verbunden ist, so wird bereits vor Eintritt des Mediums 4 in den Tank 6 eine teilweise Entgasung erfolgen.

Die vorliegende Erfindung zeigt ihre Vorteile insbesondere bei flüssigen Medien. Sie ist jedoch nicht auf eine Verwendung bei flüssigen Medien beschränkt, sondern kann viele ihrer Vorteile auch bei zähflüssigen Medien oder sogar bei Schüttgütern entfalten.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

## Patentansprüche

1. Vorrichtung zur Förderung eines Mediums (4) von einem Behälter (12) in einen Tank (6) und zur Bestimmung der Menge des Mediums (4), mit
- einer Leitungseinrichtung (14) zwischen dem Behälter (12) und dem Tank (6),
- einer mit der Leitungseinrichtung (14) in Verbindung stehenden Fördereinrichtung (10),
- einer Einrichtung zum Abscheiden von Gas aus dem Medium (4) und
- einer Messeinrichtung zur Bestimmung der Menge des Mediums (4).
**dadurch gekennzeichnet,**
- **daß** das Abscheiden von Gas aus dem Medium (4) in dem Tank (6) erfolgt und
- **daß** als Meßeinrichtung eine Füllpegel-Meßeinrichtung (16, 18, 20, 22) im wesentlichen im Inneren des Tanks (6) angeordnet und zur Bestimmung der Position mindestens einer Grenzfläche (24) des Mediums (4) in dem Tank (6) vorgesehen ist.

2. Vorrichtung nach Anspruch 1,
**dadurch gekennzeichnet,**
- **daß** die Meßeinrichtung eine Füllpegel-Meßeinrichtung (16, 18, 20, 22) ist, welche einen nach dem magnetostriktiven Prinzip arbeitenden und mit einer Rechenvorrichtung (48) gekoppelten, transsonaren Wegaufnehmer mit mindestens einem Peilstab (16) und mindestens einem Schwimmer (20) aufweist, und
- **daß** der oder die Schwimmer (20) mit mindestens einem Magneten versehen ist/sind.

3. Vorrichtung nach einem der Ansprüche 1 oder 2,
**dadurch gekennzeichnet,**
**daß** der Peilstab (16) an der Oberseite des Tanks (6) befestigt ist.

4. Vorrichtung nach Anspruch 2 oder 3,
**dadurch gekennzeichnet,**
- **daß** ein Referenzsignalgeber (22) an der Unterseite des Tanks (6) im wesentlichen auf der Achse des Peilstabs (16) angeordnet ist und
- **daß** der Peilstab (16) den Referenzsignalgeber (22) durchdringt.

5. Vorrichtung nach einem der Ansprüche 1 oder 2,
**dadurch gekennzeichnet,**
**daß** der Peilstab (16) an der Unterseite des Tanks (6) befestigt ist.

6. Vorrichtung nach einem der vorangehenden Ansprüche,
**dadurch gekennzeichnet,**
**daß** die Füllpegel-Meßeinrichtung (16, 18, 20, 22) mit einer Meßfrequenz von 500 Hz betreibbar ist.

7. Vorrichtung nach einem der vorangehenden Ansprüche,
**dadurch gekennzeichnet,**
**daß** als Schwimmer (20) ein Doppelschwimmer (60, 62) zur Dichtemessung vorgesehen ist.

8. Vorrichtung nach einem der vorangehenden Ansprüche,
**dadurch gekennzeichnet,**
**daß** der Peilstab (16) von einem Beruhigungsrohr (56) umgeben ist, wobei des Beruhigungsrohr (56) einzelne Öffnungen (58) aufweist.

9. Vorrichtung nach einem der vorangehenden Ansprüche,
**dadurch gekennzeichnet,**
**daß** eine Rechenvorrichtung (48) vorgesehen ist, welche ein auf Software basierendes digitales Filter aufweist und welche zur Umformung der Füllpegelwerte in Volumenwerte geeignet ist.

10. Vorrichtung nach Anspruch 1,
**dadurch gekennzeichnet,**
**daß** als Füllpegel-Meßeinrichtung eine kapazitive, potentiometrische oder eine Ultraschall-Meßeinrichtung vorgesehen ist.

11. Vorrichtung nach einem der vorangehenden Ansprüche,
**dadurch gekennzeichnet,**
**daß** der Peilstab (16), insbesondere in symmetrischen Tanks (6), in der volumetrischen Mitte angeordnet ist.

12. Vorrichtung nach einem der vorangehenden Ansprüche,
**dadurch gekennzeichnet,**
**daß** eine Temperaturmeßeinrichtung vorgesehen ist und/oder ein zweiachsiges Inklinometer zur Messung der Winkelstellung des Tanks (6), wobei die resultierenden Werte einer Rechenvorrichtung (48) zuführbar sind.

13. Vorrichtung nach einem der vorangehenden Ansprüche,
**dadurch gekennzeichnet,**
- **daß** in der Zuleitung zu dem Tank (6) ein Durchflußmesser vorgesehen ist und
- **daß** ein Probenentnehmer vorgesehen ist, wobei die Probenmenge proportional zum Volumenstrom durch das System entnehmbar ist.

14. Vorrichtung nach einem der vorangehenden Ansprüche,
**dadurch gekennzeichnet,**
**daß** die Leitungseinrichtung (14) ein Rückschlagventil (44) und ein oder mehrere einstellbare(s) bzw. steuerbare(s) Ventil(e) (46) aufweist.

15. Vorrichtung nach einem der vorangehenden Ansprüche,
**dadurch gekennzeichnet,**
**daß** die Leitungseinrichtung (14) Windungen (64) aufweist.

16. Vorrichtung nach einem der vorangehenden Ansprüche,
**dadurch gekennzeichnet,**
**daß** die Fördereinrichtung (10) eine Impellerpumpe ist.

17. Vorrichtung nach einem der vorangehenden Ansprüche,
**dadurch gekennzeichnet,**
**daß** eine Rechenvorrichtung (48) mit dem oder den einstellbaren bzw. steuerbaren Ventil(en) (46) und/oder mit der Fördereinrichtung (10) verbunden ist, wobei mit der Rechenvorrichtung beliebige Meßergebnisse aufnehmbar sind und beliebige Prozeßparameter steuerbar, überwachbar und regelbar sind.

18. Verfahren zur Förderung eines Mediums (4 )von einem Behälter (12) in einen Tank (6) und zur Bestimmung der Menge des Mediums (4), bei dem
- das Medium (4) mit Hilfe einer Fördereinrichtung (10) in einer Leitungseinrichtung (14) transportiert wird,
- von dem Medium (4) aufgenommenes Gas abgeschieden wird und
- die Menge des Mediums mit Hilfe einer Messeinrichtung bestimmt wird,
**dadurch gekennzeichnet,**
- **daß** die Gasabscheidung zumindest teilweise in dem Tank (6) erfolgt, und
- **daß** die Menge des Mediums (4) in dem Tank (6) über den Füllpegel des Mediums (4) mit einer Füllpegel-Meßeinrichtung (16, 18, 20, 22) gemessen wird.

19. Verfahren nach Anspruch 18,
**dadurch gekennzeichnet,**
**daß** die Füllpegel-Meßeinrichtung (16, 18, 20, 22) nach dem magnetostriktiven Prinzip arbeitet.

20. Verfahren nach Anspruch 18 oder 19,
**dadurch gekennzeichnet,**
**daß** der Füllpegel durch Ermitteln der Differenz der Laufzeiten eines am Ort eines Schwimmers (20) erzeugten sowie eines an einem bezüglich des Tanks (6) festen Ort (22) erzeugten Signals bestimmt wird.

21. Verfahren nach einem der Ansprüche 18 bis 20,
**dadurch gekennzeichnet,**
**daß** eine oder mehrere Temperaturmessungen durchgeführt werden, die Winkelstellung des Tanks (6) und/oder die Dichte des Mediums (4) gemessen werden, wobei die Ergebnisse einer Rechenvorrichtung (48) zugeführt werden.

22. Verfahren nach einem der Ansprüche 18 bis 21,
**dadurch gekennzeichnet,**
**daß** eine Meßfrequenz von 500 Hz verwendet wird.

23. Verfahren nach einem der Ansprüche 18 bis 22,
**dadurch gekennzeichnet,**
**daß** ein Teil des eingeschlossenen Gases vor Eintritt in den Tank (6) abgeschieden wird.

24. Verfahren nach einem der Ansprüche 21 bis 30,
**dadurch gekennzeichnet,**
**daß** während des Füllvorganges Proben entnommen werden, wobei die Probenmenge mit dem Transportvolumen korreliert ist.

25. Verfahren nach einem der Ansprüche 18 bis 24,
**dadurch gekennzeichnet,**
**daß** mit einer Rechenvorrichtung (48)
- die Ventilstellung gesteuert wird,
- die Förderleistung gesteuert und/oder überwacht wird,
- der Füllpegel kontinuierlich überwacht wird,
- auf der Grundlage eines digitalen Filters auf Software-Basis die Messung des Füllpegels ausgewertet wird und/oder
- beliebige Meßergebnisse aufgenommen und beliebige Prozeßparameter gesteuert, überwacht und geregelt werden.

## Claims

1. Device for conveying a medium (4) from a container (12) to a tank (6) and for determining the quantity of the medium (4), having
- a conduit device (14) between the container (12) and the tank (6),
- a conveying device (10) connected to the conduit device (14) and
- a device for separating gas from the medium (4) and
- a measuring device for determining the quantity of the medium (4)
**characterized in**
- **that** the separation of gas from the medium (4) takes place in the tank (6) and
- **that** as a measuring device a filling level measuring device (16, 18, 20, 22) is provided substantially in the interior of the tank (6) and for determining the position of at least one boundary surface (24) of the medium (4) in the tank (6).

2. Device according to claim 1,
**characterized in**
- **that** the measuring device is a filling level measuring device (16, 18, 20, 22) having a transsonar displacement transducer coupled to a calculating device (48) and operating according to the magnetostrictive principle and having at least one dipstick (16) and at least one float (20) and
- **that** the float or floats (20) are provided with at least one magnet.

3. Device according to one of the claims 1 or 2,
**characterized in**
**that** the dipstick (16) is fixed to the top of the tank (6).

4. Device according to claim 2 or 3,
**characterized in**
- **that** a reference signal generator (22) is provided on the underside of the tank (6) substantially on the axis of the dipstick (16) and
- **that** the dipstick (16) penetrates the reference signal generator (22).

5. Device according to one of the claims 1 or 2,
**characterized in**
**that** the dipstick (16) is fixed to the underside of the tank (6).

6. Device according to one of the preceding claims,
**characterized in**
**that** the filling level measuring device (16, 18, 20, 22) can be operated with a measuring frequency of 500 Hz.

7. Device according to one of the preceding claims,
**characterized in**
**that** the float (20) is constituted by a double float (60, 62) for density measurement.

8. Device according to one of the preceding claims,
**characterized in**
**that** the dipstick (16) is surrounded by a calming pipe (56), the calming pipe (56) having individual openings (58).

9. Device according to one of the preceding claims,
**characterized in**
**that** a calculating device (48) is provided, which has a software-based, digital filter and which is suitable for converting filling level values into volume values.

10. Device according to claim 1,
**characterized in**
**that** as the filling level measuring device there is provided a capacitive, potentiometric or ultrasonic measuring device.

11. Device according to one of the preceding claims,
**characterized in**
**that** particularly in symmetrical tanks (6), the dipstick (16) is located in the volumetric centre.

12. Device according to one of the preceding claims,
**characterized in**
**that** a temperature measuring device is provided and/or a biaxial inclinometer for measuring the angular position of the tank (6), the resulting values being suppliable to a calculating device (48).

13. Device according to one of the preceding claims,
**characterized in**
- **that** a flowmeter is located in the feedline of the tank (6) and
- **that** a sampler is provided, the sample quantity being removable in proportion to the volume flow through the system.

14. Device according to one of the preceding claims,
**characterized in**
**that** the conduit device (14) has a check valve (44) and one or more adjustable or controllable valves (46).

15. Device according to one of the preceding claims,
**characterized in**
**that** the conduit device (14) has coils (64).

16. Device according to one of the preceding claims,
**characterized in**
**that** the conveying device (10) is an impeller pump.

17. Device according to one of the preceding claims,
**characterized in**
**that** a calculating device (48) is connected to the adjustable or controllable valve or valves (46) and/or to the conveying device (10), the calculating device being able to record random measured results and to control, to monitor and to regulate random process parameters.

18. Method for conveying a medium (4) from a container (12) into a tank (6) and for determining the quantity of the medium (4), in which
- the medium (4) is transported via a conveying device (10) in a conduit device (14),
- gas absorbed by the medium (4) is separated, and
- the quantity of the medium is determined by a measuring device,
**characterized in**
- **that** the gas separation at least partly takes place in the tank (6) and
- **that** the quantity of the medium (4) in the tank (6) is measured via the filling level of the medium (4) by a filling level measuring device (16, 18, 20, 22).

19. Method according to claim 18,
**characterized in**
**that** the filling level measuring device (16, 18, 20, 22) operates according to the magnetostrictive principle.

20. Method according to claim 18 or 19,
**characterized in**
**that** the filling level is determined by establishing the difference of the transit times of a signal generated at the location of a float (20) and a signal generated at a fixed location (22) relative to the tank (6).

21. Method according to one of the claims 18 to 20,
**characterized in**
**that** one or more temperature measurements are performed, the angular position of the tank (6) and/or the density of the medium (4) is measured, the results being supplied to a calculating device (48).

22. Method according to one of the claims 18 to 21,
**characterized in**
**that** a measuring frequency of 500 Hz is used.

23. Method according to one of the claims 18 to 22,
**characterized in**
**that** a part of the occluded gas is separated prior to the entry into the tank (6).

24. Method according to one of the claims 21 to 30,
**characterized in**
**that** samples are taken during the filling process, the sample quantity being correlated with the transported volume.

25. Method according to one of the claims 18 to 24,
**characterized in**
**that** with a calculating device (48)
- the valve position is controlled,
- the delivery rating is controlled and/or monitored,
- the filling level is continuously monitored,
- on the basis of a software-based digital filter the measurement of the filling level is evaluated and/or
- random measured results are recorded and random process parameters are controlled, monitored and regulated.

## Revendications

1. Dispositif d'acheminement d'un fluide (4) d'un récipient (12) à un réservoir (6) et de détermination de la quantité de fluide (4), avec
- une installation de tuyauterie (14) entre le récipient (12) et le réservoir (6),
- une installation d'acheminement (10) en communication avec l'installation de tuyauterie (14),
- un dispositif pour séparer du gaz d'avec le fluide (4), et
- un dispositif de mesure pour déterminer la quantité du fluide (4),
***caractérisé***
- ***en ce que*** la séparation du gaz d'avec le fluide (4) s'effectue dans le réservoir (6), et
- ***en ce que,*** comme dispositif de mesure, un dispositif de mesure du niveau de remplissage (16, 18, 20, 22) est placé pour l'essentiel à l'intérieur du réservoir (6) et est prévu pour déterminer la position d'au moins une surface limite (24) du fluide (4) dans le réservoir (6).

2. Dispositif selon la revendication 1, ***caractérisé***
- ***en ce que*** le dispositif de mesure est un dispositif (16, 18, 20, 22) de mesure du niveau de remplissage qui comporte un capteur de déplacement transsonique travaillant selon le principe magnétostrictif et couplé à un dispositif de calcul (48), avec au moins une jauge de niveau (16) et au moins un flotteur (20), et
***en ce que*** le ou les flotteurs (20) est/sont muni(s) d'au moins un aimant.

3. Dispositif selon l'une quelconque des revendications 1 ou 2, ***caractérisé en ce que*** la jauge de niveau (16) est fixée sur la face supérieure du réservoir (6).

4. Dispositif selon la revendication 2 ou 3, ***caractérisé***
- ***en ce qu***'un émetteur (22) de signaux de référence est placé sur la face inférieure du réservoir (6) pour l'essentiel sur l'axe de la jauge (16) et
- ***en ce que*** la jauge (16) traverse l'émetteur (22) de signaux de référence.

5. Dispositif selon l'une quelconque des revendications 1 ou 2, ***caractérisé en ce que*** la jauge (16) est fixée sur la face inférieure du réservoir (6).

6. Dispositif selon l'une quelconque des revendications précédentes, ***caractérisé en ce que*** le dispositif (16, 18, 20, 22) de mesure du niveau de remplissage est utilisable avec une fréquence de mesure de 500 Hz.

7. Dispositif selon l'une quelconque des revendications précédentes, ***caractérisé en ce que,*** comme flotteur (20), un double flotteur (60, 62) est prévu pour la mesure de densité.

8. Dispositif selon l'une quelconque des revendications précédentes, ***caractérisé en ce que*** la jauge (16) est entourée d'un tube de stabilisation (56), le tube de stabilisation (56) présentant différentes ouvertures (58).

9. Dispositif selon l'une quelconque des revendications précédentes, ***caractérisé en ce qu***'il est prévu un dispositif de calcul (48) qui comporte un filtre numérique basé sur un logiciel et qui convient pour transformer les valeurs de niveau de remplissage en des valeurs de volume.

10. Dispositif selon la revendication 1, ***caractérisé en ce qu***'il est prévu comme dispositif de mesure du niveau de remplissage, un dispositif de mesure capacitif, potentiométrique ou à ultrasons.

11. Dispositif selon l'une quelconque des revendications précédentes, ***caractérisé en ce que*** la jauge (16), en particulier dans des réservoirs (6) symétriques, est placée au centre volumétrique.

12. Dispositif selon l'une quelconque des revendications précédentes, ***caractérisé en ce qu***'un dispositif de mesure de température est prévu et/ou un inclinomètre à deux axes pour mesurer la position angulaire du réservoir (6), les valeurs obtenues pouvant être envoyées à un dispositif de calcul (48).

13. Dispositif selon l'une quelconque des revendications précédentes, ***caractérisé***
- ***en ce qu***'un mesureur de débit est prévu sur le tuyau d'arrivée dans le réservoir (6), et
- ***en ce qu***'un préleveur d'échantillons est prévu, la quantité d'échantillon pouvant être prélevée de manière proportionnelle au débit volumique dans le système.

14. Dispositif selon l'une quelconque des revendications précédentes, ***caractérisé en ce que*** l'installation de tuyauterie (14) comprend un clapet anti-retour (44) et une ou plusieurs vanne(s) (46) réglable(s) ou pilotable(s).

15. Dispositif selon l'une quelconque des revendications précédentes, ***caractérisé en ce que*** l'installation de tuyauterie (14) présente des spires (64).

16. Dispositif selon l'une quelconque des revendications précédentes, ***caractérisé en ce que*** l'installation d'acheminement (10) est une pompe centrifuge.

17. Dispositif selon l'une quelconque des revendications précédentes, ***caractérisé en ce qu***'un dispositif de calcul (48) est relié à la ou aux vanne(s) (46) réglable(s) ou pilotable(s) et/ou à l'installation d'acheminement (10), des résultats de mesure quelconques pouvant être relevés avec le dispositif de calcul et des paramètres de procédé quelconques pouvant être pilotés, surveillés et régulés.

18. Procédé d'acheminement d'un fluide (4) d'un récipient (12) à un réservoir (6) et de détermination de la quantité du fluide (4), dans lequel
- le fluide (4) est transporté à l'aide d'une installation d'acheminement (10) présent dans une installation de tuyauterie (14),
- du gaz absorbé par le fluide (4) est séparé, et
- la quantité de fluide est déterminée à l'aide d'un dispositif de mesure,
***caractérisé***
- ***en ce que*** la séparation du gaz s'effectue au moins partiellement dans le réservoir (6), et
- ***en ce que*** la quantité du fluide (4) est mesurée dans le réservoir (6) par l'intermédiaire du niveau de remplissage du fluide (4) avec un dispositif de mesure du niveau de remplissage (16, 18, 20, 22).

19. Procédé selon la revendication 18, ***caractérisé en ce que*** le dispositif de mesure du niveau de remplissage (16, 18, 20, 22) fonctionne selon le principe magnétostrictif.

20. Procédé selon la revendication 18 ou 19, ***caractérisé en ce que*** le niveau de remplissage est déterminé en déterminant la différence des durées d'écoulement entre un signal produit sur l'emplacement d'un flotteur (20) et un signal produit sur un emplacement (22) fixe par rapport au réservoir (6).

21. Procédé selon l'une quelconque des revendications 18 à 20, ***caractérisé en ce qu***'une ou plusieurs mesures de températures sont effectuées, la position angulaire du réservoir (6) et/ou la densité du fluide (4) sont mesurées, les résultats étant envoyés à un dispositif de calcul (48).

22. Procédé selon l'une quelconque des revendications 18 à 21, ***caractérisé en ce qu***'on utilise une fréquence de mesure de 500 Hz.

23. Procédé selon l'une quelconque des revendications 18 à 22, ***caractérisé en ce qu***'une partie du gaz enfermé est séparée avant l'entrée dans le réservoir (6).

24. Procédé selon l'une quelconque des revendications 21 à 30, ***caractérisé en ce que,*** pendant la phase de remplissage, des échantillons sont prélevés, la quantité des échantillons étant corrélée au volume de transport.

25. Procédé selon l'une quelconque des revendications 18 à 24, ***caractérisé en ce qu***'avec un dispositif de calcul (48)
- la position des vannes est pilotée,
- la puissance d'acheminement est pilotée et/ou surveillée,
- le niveau de remplissage est surveillé en continu,
- sur la base d'un filtre numérique à base de logiciel, la mesure du niveau de remplissage est analysée, et/ou
- des résultats de mesure quelconques sont relevés et des paramètres de procédé quelconques sont pilotées, surveillés et régulés.
